# FASCICULE DE BREVET EUROPEEN

(11) **EP 1 953 084 B1**
(45) Date de publication et mention de la délivrance du brevet: **30.12.2009**
(21) Numéro de dépôt: 08150683.4
(22) Date de dépôt: 25.01.2008
(51) Int. Cl.: B64C 11/30, F04D 29/32

(54) **Turbopropulseur à hélice à pas réglable**
Turbopropellertriebwerk mit Propeller mit regulierbarer Steigung
Turbo-propeller with adjustable pitch propeller

(30) Priorité: 26.01.2007 FR 0752910
(43) Date de publication de la demande: 06.08.2008
(73) Titulaire: SNECMA, 75015 Paris (FR)
(72) Inventeur: Gallet, François, 75012 Paris (FR)
(74) Mandataire: Barbin le Bourhis, Joël

(56) Documents cités:
- FR-A- 887 543
- FR-A- 891 706
- FR-A- 998 574
- GB-A- 544 948
- US-A- 2 394 299

## Description

L'invention se rapporte à un turbopropulseur à hélices du type à pas réglable, où chaque hélice comporte un ensemble de pales à orientation réglable, commandé. L'orientation réglable des pales constitue l'un des paramètres permettant de gérer la poussée du turbopropulseur. L'invention concerne un mécanisme de commande d'orientation de ces pales.

Un turbopropulseur du type cité ci-dessus doit comporter un système de réglage de l'orientation des pales, pour pouvoir constamment adapter la puissance du moteur aux conditions d'utilisation. Antérieurement, on a proposé des systèmes de commande d'orientation des pales où les éléments de commande étaient agencés au niveau de l'axe du moteur, c'est-à-dire plus particulièrement dans l'espace central de la turbine annulaire entraînant les pales. Très classiquement, cette turbine est du type comportant deux rotors libres contrarotatifs et chaque rotor est lié à un support tournant sur lequel sont installées les pales de deux hélices.

Les deux supports tournants sont donc coaxiaux, décalés axialement et contrarotatifs et, lorsque les moyens de commande de l'orientation des pales sont situés au voisinage de l'axe de la turbine, il est nécessaire de prévoir un dispositif mécanique intermédiaire pour assurer la commande de l'orientation des pales à travers les rotors de turbine. Ce mécanisme est lourd, coûteux et sa maintenance est malaisée.

L'invention permet de limiter ces inconvénients, en remplaçant une telle commande mécanique interne par une commande mécanique agencée essentiellement sur l'extérieur du moteur entre le carter fixe du turbopropulseur et le ou les supports tournants.

FR-A-99 8574, considéré comme l'état de la technique le plus proche, décrit un turbopropulseur à hélice à pales pivotantes manoeuvrées par un anneau d'actionnement formant zone dentée lui-même couplé à un anneau de commande. L'invention propose un système de réglage d'orientation des pales plus simple moins volumineux et de maintenance facile.

Plus particulièrement, l'invention concerne un Turbopropulseur comportant au moins une hélice formée d'un ensemble de pales solidaires d'un premier support tournant annulaire en rotation autour d'un axe moteur, jouxtant un carter fixe extérieur abritant une turbine dont un rotor entraîne ledit premier support tournant, chaque pale dudit ensemble étant montée pivotante autour d'un axe sur ledit premier support tournant, chaque axe de pale comportant un pignon en engrènement avec un premier anneau d'actionnement formant roue dentée, monté avec possibilité de rotation autour dudit axe moteur sur ledit premier support tournant, et l'anneau d'actionnement étant couplé à un premier anneau de commande extérieur coaxial audit premier support tournant, par l'intermédiaire d'un premier mécanisme épicycloïdal porté par ledit premier support tournant, caractérisé en ce que ledit premier mécanisme épicycloïdal comporte une couronne porte-satellites, montée avec possibilité de rotation sur ledit premier support tournant, en ce que cette couronne porte deux groupes de pignons satellites, les pignons d'un premier groupe étant intercalés entre une couronne dentée du premier support tournant et une couronne dentée du carter fixe et les pignons d'un second groupe étant intercalés entre une couronne dentée dudit premier anneau d'actionnement et une couronne dentée dudit premier anneau de commande.

Il est remarquable que tous les éléments qui viennent d'être cités sont agencés à l'extérieur, la plupart sur ledit support tournant.

Il est relativement facile de prévoir des moyens d'actionnement (vérins, moteurs électriques...) entre l'anneau de commande et le carter fixe du turbopropulseur. La mise en mouvement de ces moyens d'actionnement agit sur l'ensemble du mécanisme, pour modifier in fine l'orientation des pales.

Dans le cas classique où le turbopropulseur est équipé de deux hélices respectivement portées par un premier et un second support tournant, annulaires, entraînés en sens inverse l'un par rapport à l'autre, les pales portées par ledit second support tournant sont actionnées par un agencement comparable comprenant un second mécanisme épicycloïdal porté par ledit second support tournant.

Plus précisément, un second anneau d'actionnement formant roue dentée est monté avec possibilité de rotation sur ledit second support tournant et ce second anneau d'actionnement est couplé à un second anneau de commande coaxial au second support tournant par l'intermédiaire dudit second mécanisme épicycloïdal.

Avantageusement, ledit second anneau de commande comporte une couronne dentée en prise avec les pignons des pales portées par ledit premier support tournant.

Comme mentionné précédemment, ledit second mécanisme épicycloïdal est identique au premier mais les pignons satellites d'un premier groupe précité sont intercalés entre une couronne dentée du second support tournant et une couronne dentée dudit premier support tournant.

L'invention sera mieux comprise et d'autres avantages de celle-ci apparaîtront mieux à la lumière de la description qui va suivre d'un turbopropulseur conforme à son principe, donnée uniquement à titre d'exemples et faite en référence aux dessins annexés, dans lesquels ;

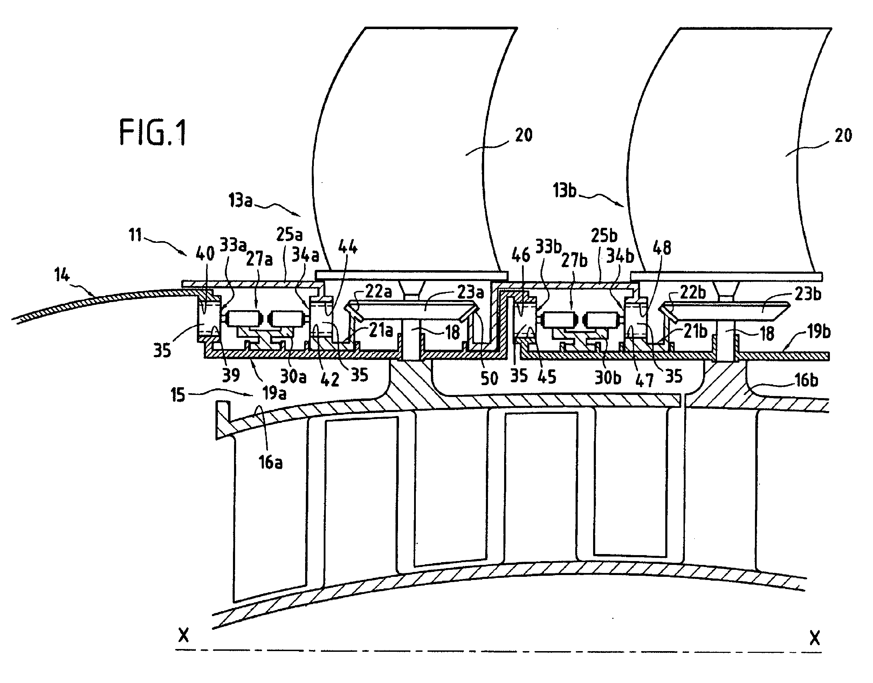

- la figure 1 est une demi-coupe schématique partielle d'un turbopropulseur conforme à l'invention ; et

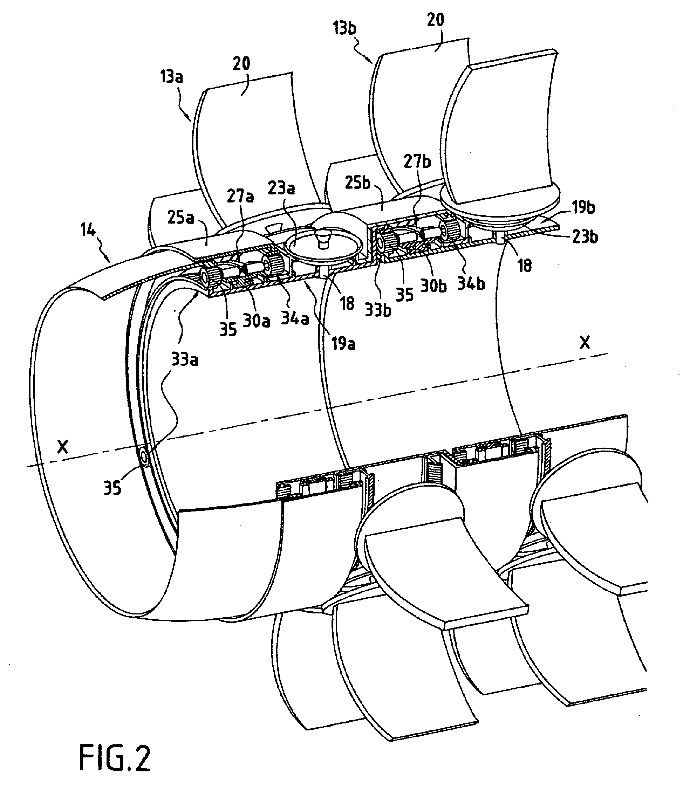

- la figure 2 est une vue schématique partielle en perspective de la partie extérieure du même turbopropulseur, la turbine n'étant pas représentée.

Sur les dessins, on a représenté une partie d'un turbopropulseur 11 à deux hélices 13a, 13b. Les parties plus particulièrement représentées sont le carter extérieur fixe 14 du turbopropulseur, une turbine libre 15 à deux rotors 16a, 16b contrarotatifs, installés à l'intérieur du carter 14 et deux supports tournants 19a, 19b, annulaires, respectivement portés par les rotors 16a et 16b.

Les hélices 13a, 13b sont respectivement installées sur les supports tournants 19a, 19b, chaque hélice étant constituée par un ensemble de pales 20. Chaque pale est montée pivotante sur le support tournant correspondant, autour d'un axe 18 s'étendant ici radialement par rapport à l'axe de rotation X-X du turbopropulseur.

Les deux supports tournants 19a, 19b, sont installés dans le prolongement axial l'un de l'autre, sensiblement au même niveau que le carter fixe 14, extérieur. Dans l'exemple, ledit premier support tournant est celui qui se trouve le plus en avant du turbopropulseur.

Ledit premier support tournant 19a, solidaire en rotation du rotor 16a et agencé à l'extérieur de celui-ci porte un anneau d'actionnement 21a comprenant la roue dentée 22a, monté avec possibilité de rotation axiale (d'axe X-X) sur ledit premier support tournant 19a. Par ailleurs, chaque axe de pale comporte un pignon 23a engrenant avec la roue dentée 22a de cet anneau d'actionnement 21a. L'anneau d'actionnement 21a est mis en mouvement par l'anneau de commande 25a extérieur (qui est coaxial audit premier support tournant 19a) par l'intermédiaire d'un premier mécanisme épicycloïdal 27a porté par ledit premier support tournant.

Plus précisément, ce premier mécanisme épicycloïdal 27a comporte une couronne porte-satellites 30a montée avec possibilité de rotation (axiale d'axe XX) sur ledit premier support tournant et cette couronne porte-satellites supporte deux groupes 33a 34a de pignons satellites 35. Par exemple, chaque groupe comporte trois pignons 35 décalés circonférentiellement les uns par rapport aux autres. Dans ce cas, les pignons sont angulairement décalés de 120° autour de l'axe X-X. Les pignons 35 d'un premier groupe 33a sont intercalés entre une couronne dentée 39 du premier support tournant et une couronne dentée 40 du carter fixe 14. Les pignons du second groupe 34a sont intercalés entre une couronne dentée 42 dudit premier anneau d'actionnement 21a et une couronne dentée 44 du premier anneau de commande 25a.

Des moyens d'actionnement non représentés peuvent être agencés entre l'anneau de commande 25a et le carter fixe 14 du turbopropulseur. Comme on le verra plus loin, la mise en mouvement de l'anneau de commande modifie les vitesses du mécanisme épicycloïdal, et provoque donc une rotation des pales autour de leurs axes 18.

Le second support tournant 19b est solidaire en rotation du second rotor 16b de la turbine. Il est entraîné en sens inverse du premier support tournant. Les pales 20b portées par ce second support tournant sont actionnées par un agencement comparable, comprenant un second mécanisme épicycloïdal porté par ledit second support tournant 19b.

Plus précisément, on distingue un second anneau d'actionnement 21b formant roue dentée 22b, qui est monté avec possibilité de rotation sur ledit second support tournant 19b. La roue dentée 22b engrène avec des pignons 23b portés par les axes 18 des pales 20 de l'hélice 13b. Le second anneau d'actionnement 21b est couplé à un second anneau de commande 25b, coaxial audit second support tournant 19b par l'intermédiaire d'un second mécanisme épicycloïdal 27b. Cet anneau de commande 25b est mis en mouvement (relatif par rapport au carter 19b) par une rotation du pignon 23a.

Ledit second mécanisme épicycloïdal 27b est identique au premier. Il comporte une couronne porte-satellites 30b montée avec possibilité de rotation sur ledit premier support tournant. Cette couronne porte-satellites porte deux groupes 33b, 34b de pignons satellites 35. Les pignons du premier groupe sont intercalés entre une couronne dentée 45 dudit second support tournant 19b et une couronne dentée 46 portée par ledit premier support tournant 19a. Les pignons du second groupe sont intercalés entre une couronne dentée 47 dudit second anneau d'actionnement 21b et une couronne dentée 48 dudit second anneau de commande 25b. Ce dernier comporte une couronne dentée 50 en prise avec les pignons 23a des pales portées par ledit premier support tournant.

Le fonctionnement est le suivant.

En considérant l'hélice 13a et le premier support tournant 19a, il est clair que ce dernier tourne par rapport au carter 14, à la vitesse qui lui est donnée par le rotor 16a. Les pignons 35 du premier groupe 33a sont soumis à un mouvement épicycloïdal (i.e. composé d'une rotation autour de son axe propre, avec une rotation autour de l'axe moteur). Ce mouvement entraîne la rotation de la couronne porte-satellites 30a autour de l'axe moteur. Le porte satellite entraîne dans son mouvement le second groupe de satellite 34a. Ils subiront par conséquent un mouvement épicycloïdal.

Si l'anneau de commande 25a est maintenu dans une position fixe et prédéterminée, c'est-à-dire s'il ne tourne pas par rapport au carter fixe 14, le mouvement des pignons satellites du second groupe est identique à celui des pignons satellites du premier groupe (en effet, comme ils ont les mêmes dimensions, et comme les couronnes ont le même rayon, qu'elles sont coaxiales, et (dans ce cas) fixe, ils ont par conséquents les mêmes vitesses de rotation). Ainsi, le support tournant 19a et l'anneau 21a tournent à la même vitesse autour de l'axe moteur ; il n'y a pas de mouvement relatif entre eux. Ainsi, la position des pales 20 est fixe par rapport au support tournant et reste donc stable. En revanche, si on fait pivoter ledit premier anneau de commande 25a par rapport au carter 14, les mouvements du support tournant et de l'anneau d'actionnement diffèrent (les vitesses de rotation autour de l'axe moteur ne sont plus identiques), ce qui entraîne une rotation des axes 18 et par conséquent une variation d'orientation des pales 20.

Le fonctionnement est identique pour l'hélice 13b dont les pales 20 sont entraînées en rotation sous la commande du second anneau d'actionnement 21b entraîné par le changement d'orientation des pales de la première hélice 13a, avec interposition du second mécanisme épicycloïdal 27b porté par ledit second support tournant 19b.

## Revendications

1. Turbopropulseur comportant au moins une hélice (13a) formée d'un ensemble de pales (20) solidaires d'un premier support tournant (19a) annulaire en rotation autour d'un axe moteur (XX), jouxtant un carter fixe (14) extérieur abritant une turbine dont un rotor (16a) entraîne ledit premier support tournant, chaque paie dudit ensemble étant montée pivotante autour d'un axe sur ledit premier support tournant, chaque axe de pale comportant un pignon (23a) en engrènement avec un premier anneau d'actionnement (21a) formant roue dentée (22a), monté avec possibilité de rotation autour dudit axe moteur sur ledit premier support tournant, et l'anneau d'actionnement étant couplé à un premier anneau de commande (25a) extérieur coaxial audit premier support tournant, par l'intermédiaire d'un premier mécanisme épicycloïdal (27a) porté par ledit premier support tournant, **caractérisé en ce que** ledit premier mécanisme épicycloïdal (27a) comporte une couronne porte-satellites (30a), montée avec possibilité de rotation sur ledit premier support tournant, **en ce que** cette couronne porte deux groupes (33a, 34a) de pignons satellites, les pignons d'un premier groupe étant intercalés entre une couronne dentée (39) du premier support tournant et une couronne dentée (40) du carter fixe et les pignons d'un second groupe étant intercalés entre une couronne dentée (42) dudit premier anneau d'actionnement et une couronne dentée (44) dudit premier anneau de commande.

2. Turbopropulseur selon la revendication 1, **caractérisé en ce qu'**il comporte un second support tournant (19b) annulaire, tournant en sens inverse dudit premier support tournant et portant un second ensemble de pales, chaque pale étant montée pivotante sur ledit second support tournant, **en ce que** chaque axe de pale portée par ledit second support tournant est lié par engrenage à un second anneau d'actionnement (21b) formant roue dentée (22b), monté avec possibilité de rotation sur ledit second support tournant et **en ce que** ce second anneau d'actionnement est couplé à un second anneau de commande (25b) coaxial audit second support tournant par l'intermédiaire d'un second mécanisme épicycloïdal (27b) porté par ledit second support tournant.

3. Turbopropulseur selon la revendication 2, **caractérisé en ce que** ledit second anneau de commande comporte une couronne dentée (50) en prise avec les pignons (23a) des pales portés par ledit premier support tournant.

4. Turbopropulseur selon la revendication 2 ou 3, **caractérisé en ce que** ledit second mécanisme épicycloïdal (27b) comporte une couronne porte-satellites (30b) montée avec possibilité de rotation sur ledit second support tournant et portant deux groupes (33b, 34b) de pignons satellites (35), les pignons satellites d'un premier groupe (33b) étant intercalés entre une couronne dentée (45) dudit second support tournant et une couronne dentée (46) dudit premier support tournant et les pignons satellites d'un second groupe (34b) étant intercalés entre une couronne dentée (47) dudit second anneau d'actionnement et une couronne dentée (48) dudit second anneau de commande.

## Claims

1. A turboprop comprising at least one propeller (13a) formed by a set of blades (20) secured to a first annular rotary support (19a) mounted to rotate about an engine axis (XX) and adjacent to an outer stationary casing (14) housing a turbine having a rotor (16a) driving said first rotary support, each blade of said set being mounted on a pin to swivel relative to said first rotary support, each blade pin carrying a gearwheel (23a) meshing with a first actuator annulus (21a) forming a toothed wheel (22a) and mounted to be capable of rotating about said engine axis on said rotary support, and the actuator annulus being coupled to a first external control annulus (25a) coaxial about said first rotary support, via a first epicyclic mechanism (27a) carried by said first rotary support, the turboprop being **characterized in that** said first epicyclic mechanism (27a) carries a planet-carrier ring (30a) mounted to be capable of rotating on said first rotary support, and **in that** said ring carries two groups (33a, 34a) of planet gearwheels, the gearwheels of the first group being interposed between a toothed ring (39) of the first rotary support and a toothed ring (40) of the stationary casing, and the gearwheels of a second group being interposed between a toothed ring (42) of said first actuator annulus and a toothed ring (44) of said first control annulus.

2. A turboprop according to claim 1, **characterized in that** it includes a second annular rotary support (19b) rotatable in the opposite direction to said first rotary support and carrying a second set of blades, each blade being swivel-mounted on said second rotary support, **in that** each blade pin carried by said second rotary support is engaged by meshing with a second actuator annulus (21b) forming a toothed wheel (22b) mounted to be capable of rotating on said second rotary support, and **in that** said second actuator annulus is coupled to a second control annulus (25b) coaxial about said second rotary support via a second epicyclic mechanism (27b) carried by said second rotary support.

3. A turboprop according to claim 2, **characterized in that** said second control annulus comprises a toothed ring (50) meshing with gearwheels (23a) of blades carried by said first rotary support.

4. A turboprop according to claim 2 or claim 3, **characterized in that** said second epicyclic mechanism (27b) comprises a planet-carrier ring (30b) mounted to be capable of rotating on said second rotary support and carrying two groups (33b, 34b) of planet gearwheels (35), the planet gearwheels of a first group (33b) being interposed between a toothed ring (45) of said second rotary support and a toothed ring (46) of said first rotary support, and the planet gearwheels of a second group (34b) being interposed between a toothed ring (47) of said second actuator annulus and a toothed ring (48) of said second control annulus.

## Patentansprüche

1. Turboprop-Triebwerk mit wenigstens einem Propeller (13a), der von einer Anordnung von Flügeln (20) gebildet ist, welche mit einem ersten umlaufenden ringförmigen, sich um eine Antriebsachse (XX) drehenden Träger (19a) fest verbunden sind, der an ein festes Außengehäuse (14) angrenzt, in dem eine Turbine aufgenommen ist, von der ein Rotor (16a) den ersten umlaufenden Träger antreibt, wobei jeder Flügel der Anordnung an dem ersten umlaufenden Träger um eine Achse schwenkbar angebracht ist, wobei jede Flügelachse ein Ritzel (23a) umfaßt, das mit einem ein Zahnrad (22a) bildenden ersten Betätigungsring (21 a) in Eingriff ist, der um die Antriebsachse drehbar an dem ersten umlaufenden Träger angebracht ist, und wobei der Betätigungsring durch einen von dem ersten umlaufenden Träger getragenen ersten Planetenmechanismus (27a) mit einem zu dem ersten umlaufenden Träger koaxialen ersten äußeren Steuerring (25a) gekoppelt ist, **dadurch gekennzeichnet, daß** der erste Planetenmechanismus (27a) einen Planetenradkranz (30a) umfaßt, der an dem ersten umlaufenden Träger drehbar angebracht ist, daß dieser Kranz zwei Gruppen (33a, 34a) von Planetenrädern trägt, wobei die Räder einer ersten Gruppe zwischen einem Zahnkranz (39) des ersten umlaufenden Trägers und einem Zahnkranz (40) des festen Gehäuses angeordnet sind und die Räder einer zweiten Gruppe zwischen einem Zahnkranz (42) des ersten Betätigungsrings und einem Zahnkranz (44) des ersten Steuerrings angeordnet sind.

2. Turboprop-Triebwerk nach Anspruch 1, **dadurch gekennzeichnet, daß** es einen zweiten umlaufenden ringförmigen Träger (19b) aufweist, der zu dem ersten umlaufenden Träger in umgekehrter Richtung läuft und der eine zweite Anordnung von Flügeln trägt, wobei jeder Flügel an dem zweiten umlaufenden Träger schwenkbar angebracht ist, daß jede Achse eines von dem zweiten umlaufenden Träger getragenen Flügels mittels Getriebe mit einem ein Zahnrad (22b) bildenden zweiten Betätigungsring (21 b) verbunden ist, der an dem zweiten umlaufenden Träger drehbar angebracht ist, und daß dieser zweite Betätigungsring durch einen von dem zweiten umlaufenden Träger getragenen zweiten Planetenmechanismus (27b) mit einem zu dem zweiten umlaufenden Träger koaxialen zweiten Steuerring (25b) gekoppelt ist.

3. Turboprop-Triebwerk nach Anspruch 2, **dadurch gekennzeichnet, daß** der zweite Steuerring einen Zahnkranz (50) umfaßt, der mit den von dem ersten umlaufenden Träger getragenen Ritzeln (23a) der Flügel in Eingriff ist.

4. Turboprop-Triebwerk nach Anspruch 2 oder 3, **dadurch gekennzeichnet, daß** der zweite Planetenmechanismus (27b) einen Planetenradkranz (30b) umfaßt, der an dem zweiten umlaufenden Träger drehbar angebracht ist und der zwei Gruppen (33b, 34b) von Planetenrädern (35) trägt, wobei die Planetenräder einer ersten Gruppe (33b) zwischen einem Zahnkranz (45) des zweiten umlaufenden Trägers und einem Zahnkranz (46) des ersten umlaufenden Trägers angeordnet sind und die Planetenräder einer zweiten Gruppe (34b) zwischen einem Zahnkranz (47) des zweiten Betätigungsrings und einem Zahnkranz (48) des zweiten Steuerrings angeordnet sind.
